# FASCICULE DE BREVET EUROPEEN

(11) **EP 2 399 406 B1**
(45) Date de publication et mention de la délivrance du brevet: **20.12.2017**
(21) Numéro de dépôt: 10709875.8
(22) Date de dépôt: 16.02.2010
(51) Int. Cl.: H04W 36/00

(54) **PROCÉDÉ DE COMMUTATION DE NOEUD D'ACCÈS**
VERFAHREN ZUM SWITCHING IN EINEM ZUGANGSKNOTEN
METHOD FOR SWITCHING AN ACCESS NODE

(30) Priorité: 20.02.2009 FR 0951121
(43) Date de publication de la demande: 28.12.2011
(73) Titulaire: Orange, 75015 Paris (FR)
(72) Inventeur: HERBELIN, Philippe, F-94100 Vincennes (FR); DAOUD TRIKI, Khadija, F-92130 Issy Les Moulineaux (FR); LEVEQUE, Cédric, F-94320 Thiais (FR)
(86) Numéro de dépôt international: PCT/FR2010/050258
(87) Numéro de publication internationale: WO 2010/094882

(56) Documents cités:
- US-A1- 2007 249 291
- US-B1- 6 985 446
- US-B1- 7 284 053

## Description

Le domaine de l'invention est celui des télécommunications et plus précisément celui des réseaux de radiocommunication mobile.

Plus particulièrement, l'invention concerne la commutation de noeud d'accès d'un terminal en cours de mise en oeuvre d'une pluralité d'applications avec une ou plusieurs entité(s) communicante(s) distantes à travers un réseau à commutation de paquet.

Initialement, le terminal est connecté à un noeud d'accès origine mais peut être amené à commuter du noeud d'accès origine vers un noeud d'accès destinataire du fait de sa mobilité. On notera que les noeuds d'accès origine et destinataire peuvent appartenir à un même réseau d'accès ou bien à des réseaux d'accès distincts. Il peut s'agir de réseaux d'accès de réseaux de radiocommunication mobiles cellulaires, par exemple de type UMTS (pour "Universal Mobile Télécommunications System" en anglais), ou sans fil, par exemple de type WIMAX (pour "Worldwide Interoperability for Microwave Access" en anglais) ou encore filaires, par exemple FTTH (pour "Fiber To The Home" en anglais). En toute hypothèse, ce(s) réseau(x) d'accès sont connectés à un réseau à commutation de paquets, par exemple un réseau type IP ("Internet Protocol" en anglais), supportant l'ensemble des applications utilisées par le terminal. D'autre part, le terminal est indifféremment mono-technologie, multi technologies ou mono-technologie reconfigurable.

Le noeud d'accès est par exemple une station de base d'un réseau UMTS, HSDPA ou encore LTE ("Node B" ou "Evolved node B" en anglais), ou bien un point d'accès d'un réseau WIMAX ("Access point" en anglais).

La multiplicité d'entités communicantes distantes avec laquelle le terminal met en oeuvre la pluralité d'applications peut être composée d'un ou plusieurs autres terminaux d'utilisateur et/ou d'un ou plusieurs serveurs distants. Les paquets échangés entre le terminal et la multiplicité d'entités communicantes distantes empruntent, pour chaque application, un chemin comprenant des noeuds intermédiaires. En cas de commutation du terminal d'un noeud d'accès origine vers un noeud d'accès destinataire ("handover" en anglais), les différents chemins empruntés pour la mise en oeuvre de la pluralité d'applications sont modifiés.

Le modèle OSI, normalisé par l'ISO (Organisation Internationale de Normalisation), définit la gestion de transfert de données au moyen de sept couches protocolaires superposées: la couche physique (couche 1), la couche liaison de données (couche 2), la couche réseau (couche 3), la couche transport (couche 4), la couche session (couche 5), la couche présentation (couche 6) et la couche application (couche 7). Les différents noeuds des réseaux de télécommunications intègrent tout ou partie de ces couches. Le terminal quant à lui possède les sept couches du modèle OSI.

Les trois premières couches, dites couches basses, sont relatives à la mise en oeuvre de la connexion et au routage des données. Elles sont transparentes vis-à-vis du type de données transportées. Les quatre couches suivantes, dites couches hautes, sont responsables du traitement des données permettant d'offrir une application au terminal.

Il existe d'autres modèles de communication utilisant des couches, notamment un modèle IETF ("Internet Engineering Task Force") à cinq couches pour lequel les couches 5 à 7 définies précédemment sont confondues.

Par définition, un contexte de communication comprend l'ensemble des informations requises pour la mise en oeuvre d'une application et relatives à toutes les couches du modèle de communication utilisé.

On appelle ici configuration de transport l'ensemble des informations du contexte de communication requises pour le transport des données avec une entité communicante destinataire pour une application donnée. Les informations de transport sont par exemple l'adresse IP du terminal, l'identité du noeud d'accès, des paramètres relatifs au lien radio entre le terminal et le noeud d'accès telle la fréquence.

De même, on appelle configuration applicative l'ensemble des informations du contexte de communication requises pour la mise en oeuvre par le terminal de l'application considérée. Ces paramètres sont par exemple le type d'application, le débit, le type de codeur/décodeur activé pour l'application considérée mise en oeuvre au travers du noeud d'accès.

On rappelle que dans les couches basses, les protocoles sont échangés entre les noeuds intermédiaires voisins, alors que dans les couches hautes les protocoles sont échangés entre le terminal et le ou les entités communicantes distantes qui peuvent être séparés par de nombreux noeuds intermédiaires. Pour une application donnée, les couches basses sont ainsi chaînées le long d'un chemin entre le terminal et l'entité communicante distante correspondante au travers des noeuds intermédiaires.

Dans le cas d'un réseau UMTS, les noeuds intermédiaires sont par exemple successivement un contrôleur de station de base RNC (pour "radio network Controler" en anglais), une passerelle SGSN (pour "Serving GPRS Support Node" en anglais), une passerelle GGSN (pour "Gateway GPRS Support Node" en anglais) qui maintiennent un contexte de communication lié au terminal et aux applications en cours. Dans les évolutions du réseau UMTS, les fonctionnalités du contrôleur sont réparties entre les stations de base et les passerelles qui constituent les noeuds intermédiaires, dénommées passerelle SAE et passerelle PDN.

Dans le cas de réseaux sans fil de type WIMAX, les noeuds intermédiaires sont par exemple les passerelles AGW et des routeurs implémentant le protocole MIP de couche réseau MIP ("Mobile Internet Protocol").

Les procédures génériques de commutation de noeud d'accès comportent une étape de décision de commutation de noeud d'accès, une étape d'attachement du terminal au noeud d'accès destinataire par l'établissement d'un lien sur la couche liaison de données, une étape de détermination et de mise à jour du chemin reliant le terminal et l'entité communicante distante au travers de ce nouveau noeud d'accès, et une étape de reconfiguration du terminal pour la mise à jour de configurations applicatives selon l'état d'un deuxième lien entre le terminal et le noeud d'accès destinataire.

Dans le cas d'une gestion de changement de noeud d'accès initialisée par un équipement du réseau d'accès, dit noeud de commutation, des protocoles de type "bout en bout" sont utilisés entre ce noeud de commutation et les entités communicantes distantes pour l'exécution d'une mise à jour des différents contextes de communication. Le noeud de commutation est par exemple un noeud d'accès origine ou un noeud intermédiaire commun aux différents chemins. Les protocoles sont par exemple le protocole de couche transport SCTP (pour "Stream Control Transmission protocol" en anglais), ou le protocole de couche session SIP (pour "Session Initiation Protocol" en anglais). Ces protocoles implémentent des messages de signalisation qui ont pour objet d'informer les entités communicantes destinataires d'un changement d'adresse IP du terminal. Pour chaque application en cours, un ordre d'exécution de mise à jour du contexte de communication est émis vers le terminal, il comporte en outre l'émission d'une notification de changement configuration de transport.

Un ensemble de messages de notification est donc émis par le noeud de commutation à destination du terminal correspondant à l'ensemble d'applications en cours.

La réception par le terminal du premier message de notification de l'ensemble des messages de notification émis provoque la reconfiguration du terminal, notamment sa reconfiguration en fonction de la configuration de transport modifié du nouveau contexte de communication. Dans le cas d'un ensemble d'applications pour lesquels la configuration de transport initiale est identique, la réception du premier message entraîne la perte de connectivité du terminal avec le noeud de commutation. Le terminal n'est alors plus apte à recevoir les messages suivants de l'ensemble des messages de notification correspondant à cet ensemble d'applications. Dans ce cas, des messages de signalisation supplémentaires sont nécessaires afin de mettre à jour les chemins pour ces applications pendantes. Outre une consommation de ressources supplémentaires pour ces messages de signalisation, des délais de mise à jour des configurations applicatives des applications pendantes sont générés pouvant provoquer un arrêt ou des dysfonctionnements de ces applications notamment dans le cas d'applications de type temps réel.

Le brevet US 7,284,053 B1 divulgue une méthode de répartition de charge reposant sur le déplacement d'une ou plusieurs connexions d'un noeud de commutation vers un autre, afin de soulager les noeuds les plus chargés d'un réseau.

Dans le cas d'une gestion de commutation de noeud d'accès initialisée par un noeud de commutation, il existe donc un besoin de commutation de noeud d'accès adapté pour la mise à jour d'un ensemble d'applications pour un terminal en communication avec une ou plusieurs entités communicantes distantes.

L'invention propose donc un procédé de commutation de noeud d'accès d'un terminal apte à mettre en oeuvre un ensemble d'applications avec au moins une entité communicante distante au travers d'un réseau à commutation de paquet, le terminal étant associé à un ensemble de premiers contextes de communication, un premier contexte de communication comportant une même première configuration de transport commune à l'ensemble d'applications et une première configuration applicative correspondant à une application donnée. Le procédé comporte des itérations des étapes de :
- réception par le terminal d'un message de notification de commutation de noeud d'accès, le message indiquant un deuxième contexte de communication comportant une deuxième configuration de transport,
- réception par le terminal d'une information de comptage de message de notification,
- filtrage de la deuxième configuration de transport dudit deuxième contexte de communication en fonction de l'information de comptage,
- transmission d'un message de notification filtré à l'application correspondant à l'itération courante,
les étapes étant réitérées pour l'ensemble des premiers contextes de communication.

Ainsi, la reconfiguration du terminal est contrôlée afin d'empêcher la prise en compte prématurée de la deuxième configuration de transport commune à l'ensemble des applications. De plus, le deuxième contexte de communication comporte une indication concernant une deuxième configuration applicative. Le terminal est ainsi apte à anticiper la commutation de noeud d'accès pour chaque application mise en oeuvre, par exemple le type d'application ou encore le type de codeur/décodeur, par reconfiguration au plus tôt des paramètres requis pour la mise en oeuvre de chaque application.

L'étape de filtrage comporte pour une itération courante des sous étapes de :
- suppression de la deuxième configuration de transport, pour toutes les itérations, et
- mise à jour de paramètres de transport en fonction de la deuxième configuration de transport lorsque l'information de comptage indique que l'itération courante est la dernière itération.

Ainsi, la réception du dernier deuxième contexte de communication par le terminal entraine la reconfiguration du terminal, notamment par application des informations requises pour le transport de données après commutation. La reconfiguration finale du terminal n'est donc réalisée qu'après la réception de tous les messages de notification. La commutation est alors effectuée, l'ensemble des informations requises pour la mise en oeuvre des applications ayant été mises à jour au cours des itérations successives afin de réduire les délais de commutation.

D'autre part, le filtrage du message de notification permet d'assurer une comptabilité avec une implémentation d'applications préexistantes dans le terminal.

Le message de notification de commutation de noeud d'accès et l'information de comptage sont émis par un noeud de commutation.

Des protocoles de type "bout en bout" sont utilisés entre un noeud de commutation et les entités communicantes distantes pour une mise à jour des différents contextes de communication. Le noeud de commutation peut ainsi accéder aux informations des contextes de communication sans ajout de complexité et augmentation de délai de traitement.

Dans un mode particulier de réalisation le noeud de commutation est un noeud d'accès auquel le terminal est connecté avant commutation.

L'invention concerne également un procédé de commande de commutation de noeud d'accès d'un terminal apte à mettre en oeuvre un ensemble d'applications avec au moins une entité communicante distante au travers d'un réseau à commutation de paquet, ledit terminal étant associé à un ensemble de premiers contextes de communication, un premier contexte de communication comportant une même première configuration de transport commune à l'ensemble d'applications et une première configuration applicative correspondant à une application donnée. Le procédé, mis en oeuvre dans un noeud de commutation, comporte:
- une étape d'émission d'un message de notification de commutation de noeud d'accès à destination du terminal, le message indiquant un deuxième contexte de communication comportant une deuxième configuration de transport,
- une étape d'émission d'une information de comptage associée audit message de notification,
les étapes étant mises en oeuvre itérativement pour l'ensemble des premiers contextes de communication.

Ainsi le noeud de commutation garde le contrôle de la commutation de noeud d'accès ayant d'autre part la responsabilité de la signalisation avec la ou les entités communicantes distantes.

L'invention concerne également un dispositif de commutation de noeud d'accès d'un terminal apte à mettre en oeuvre un ensemble d'applications avec au moins une entité communicante distante au travers d'un réseau à commutation de paquet, ledit terminal étant associé à un ensemble de premiers contextes de communication, un premier contexte de communication comportant une même première configuration de transport commune à l'ensemble d'applications et une première configuration applicative correspondant à une application donnée. Le dispositif comporte:
- des moyens de réception d'un message de notification de commutation de noeud d'accès, le message indiquant un deuxième contexte de communication comportant une deuxième configuration de transport,
- des moyens de réception d'une information de comptage de message de notification,
- des moyens de filtrage de la deuxième configuration de transport du deuxième contexte de communication en fonction de l'information de comptage,
- des moyens de transmission d'un message de notification filtré à l'application correspondant à l'itération courante,
les moyens étant mis en oeuvre itérativement pour l'ensemble des premiers contextes de communication.

L'invention concerne également un dispositif de commande de commutation de noeud d'accès d'un terminal apte à mettre en oeuvre un ensemble d'applications avec au moins une entité communicante distante au travers d'un réseau à commutation de paquet, le terminal étant associé à un ensemble de premiers contextes de communication, un premier contexte de communication comportant une même première configuration de transport commune à l'ensemble d'applications et une première configuration applicative correspondant à une application donnée. Le dispositif comporte:
- des moyens d'émission d'un message de notification de commutation de noeud d'accès à destination du terminal, le message indiquant un deuxième contexte de communication comportant une deuxième configuration de transport),
- des moyens d'émission d'une information de comptage associée audit message de notification,
les moyens étant mis en oeuvre itérativement pour l'ensemble des premiers contextes de communication.

L'invention concerne également un terminal un dispositif de commutation de noeud d'accès précédemment décrit

L'invention concerne également un noeud de commutation comprenant un dispositif de commande de commutation précédemment décrit.

L'invention concerne également un système de télécommunication comprenant au moins un terminal et un noeud de commutation tels que précédemment décrit.

L'invention concerne également un programme d'ordinateur pour un terminal comportant des instructions logicielles pour commander la mise en en oeuvre du procédé de commutation de noeud d'accès lorsque ce programme est exécuté par le terminal.

L'invention concerne également un programme d'ordinateur pour un noeud de commutation comportant des instructions logicielles pour commander la mise en en oeuvre des étapes du procédé de commande de commutation lorsque ce programme est exécuté par le noeud de commutation.

Les dispositifs, terminal, noeud de commutation et système présentent des avantages analogues à ceux précédemment décrit.

L'invention sera mieux comprise à l'aide de la description suivante d'un mode de réalisation particulier du procédé de commutation, en référence aux dessins annexés qui en illustrent un exemple de réalisation dépourvu de tout caractère limitatif:
- la figure 1 représente une architecture de réseau de télécommunication comportant un terminal connecté à un noeud d'accès selon l'invention,
- la figure 2 représente un schéma bloc fonctionnel d'un dispositif de commutation de noeud d'accès pour un terminal connecté à un noeud d'accès origine selon l'invention,
- la figure 3 représente un schéma bloc fonctionnel d'un dispositif de commande de commutation de noeud d'accès pour un noeud de commutation,
- la figure 4 représente un procédé de commande de commutation de noeud d'accès pour un noeud de commutation selon l'invention,
- la figure 5 représente un procédé de commutation de noeud d'accès pour un terminal selon l'invention.

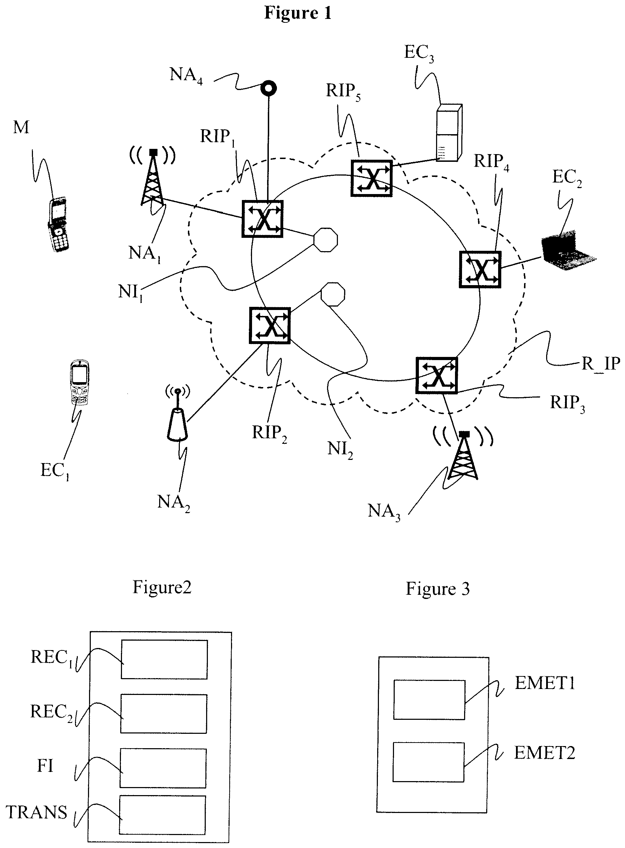

La **figure 1** représente une architecture de réseau de télécommunication pour la mise en relation d'un terminal M connecté à un noeud d'accès NA₁ avec un ensemble d'entités communicantes distantes connectées à un réseau à commutation de paquet R_IP, une entité communicante distante offrant au moins une application au terminal M au travers du réseau à commutation de paquet. L'entité communicante distante est par exemple un équipement EC₁ équipé d'une carte communicante et connecté au réseau R_IP via un noeud d'accès NA₂, un serveur EC₃ ou bien encore un équipement domestique EC₂ connectés au réseau R_IP.

Le réseau de télécommunication comporte une pluralité de noeuds d'accès. Les noeuds d'accès peuvent appartenir à un même réseau d'accès ou à différents réseaux d'accès. Pour des raisons de clarté, les réseaux d'accès ne sont pas représentés sur la figure 1. A titre d'exemple illustratif et non limitatif tel que représenté en figure 1, les noeuds d'accès NA₁ et NA₃ correspondent à des stations de base d'un réseau de radiocommunication mobile de type UMTS, le noeud d'accès NA₂ correspond à un point d'accès à un réseau sans fil de type WiMAX, le noeud d'accès NA₄ correspond à un point d'accès à un réseau filaire de type FTTH.

Les différents noeuds d'accès sont connectés au réseau à commutation de paquets R_IP, par exemple par des routeurs IP (RIP₁, RIP₂, RIP₃, RIP₄, RIP₅).

Les données échangées entre le terminal et le ou les entités communicantes empruntent des chemins comportant des noeuds intermédiaires.

Dans le cas d'un réseau UMTS, des noeuds intermédiaires sont par exemple successivement un contrôleur de station de base RNC (pour "radio network Controler" en anglais), une passerelle SGSN (pour "Serving GPRS Support Node" en anglais), une passerelle GGSN (pour "Gateway GPRS Support Node" en anglais) qui maintiennent un contexte de communication lié au terminal et aux applications en cours. Dans les évolutions du réseau UMTS, les fonctionnalités du contrôleur sont réparties entre les stations de base et les passerelles qui constituent les noeuds intermédiaires, dénommées passerelle SAE et passerelle PDN.

Dans le cas de réseaux sans fil de type WIMAX, les noeuds intermédiaires sont par exemple les passerelles AGW et des routeurs implémentant le protocole MIP de couche réseau MIP ("Mobile Internet Protocol").

Par soucis de clarté, seuls deux noeuds intermédiaires NI₁ et NI₂ sont représentés en figure 1.

Le modèle OSI, normalisé par l'ISO (Organisation Internationale de Normalisation), définit la gestion de transfert de données au moyen de sept couches protocolaires superposées: la couche physique (couche 1), la couche liaison de données (couche 2), la couche réseau (couche 3), la couche transport (couche 4), la couche session (couche 5), la couche présentation (couche 6) et la couche application (couche 7). Les différents noeuds des réseaux de télécommunications intègrent tout ou partie de ces couches. Le terminal quant à lui possède les sept couches du modèle OSI.

Les trois premières couches, dites couches basses, sont relatives à la mise en oeuvre de la connexion et au routage des données. Elles sont transparentes vis-à-vis du type de données transportées. Les quatre couches suivantes, dites couches hautes, sont responsables du traitement des données permettant d'offrir une application au terminal.

Dans le cas d'une gestion de changement de noeud d'accès effectuée par un équipement du réseau d'accès, dit noeud de commutation, des protocoles de type "bout en bout" sont utilisés entre ce noeud de commutation et les entités communicantes distantes pour une mise à jour des différents contextes de communication.

Le noeud de commutation est par exemple un noeud d'accès ou bien encore un noeud intermédiaire.

Pour un modèle de communication de type OSI, les noeuds de commutation selon l'invention intègrent les couches basses ainsi qu'au moins les couches 4 et 5 respectivement de transport et session. Pour un modèle de type IETF à 5 couches, les noeuds de commutation intègrent l'ensemble des couches protocolaires.

Par définition, un contexte de communication comprend l'ensemble des informations requises pour la mise en oeuvre d'une application et relatives à toutes les couches du modèle de communication utilisé.

On appelle dans la suite du document configuration de transport l'ensemble des informations du contexte de communication requises pour le transport des données avec une entité communicante destinataire pour une application donnée. Les informations de transport sont par exemple l'adresse IP du terminal, l'identité du noeud d'accès, des paramètres relatifs au lien radio entre le terminal et le noeud d'accès telle la fréquence.

De même, on appelle configuration applicative l'ensemble des informations du contexte de communication requises pour la mise en oeuvre par le terminal de l'application considérée. Ces paramètres sont par exemple le type d'application, le débit, le type de codeur/décodeur activé pour l'application considérée mise en oeuvre au travers du noeud d'accès origine.

La **figure 2** représente un schéma bloc fonctionnel d'un dispositif de commutation de noeud d'accès pour un terminal connecté à un noeud d'accès origine selon l'invention.

Le terminal met en oeuvre une pluralité d'applications non représentées avec une ou plusieurs entités communicantes distantes au travers d'un réseau à commutation de paquet.

Le terminal comporte en outre une unité centrale de commande, non représentée, à laquelle les moyens inclus sont reliés et destinés à contrôler le fonctionnement de ces moyens.

Un ensemble d'application est mise en oeuvre par le terminal pour lesquels les informations de transport de données sont identiques. En d'autre terme, l'ensemble des contextes de communications relatifs à des transports de données via le noeud d'accès origine, dit premiers contextes de communication, comporte une même première configuration de transport commune à l'ensemble des applications et une première configuration applicative correspondant à une application donnée.

Les contextes de communications relatifs à des transports de données via le noeud d'accès destinataire sont dit deuxièmes contextes de communication.

Le dispositif de commutation de noeud d'accès comporte:
- des moyens de réception REC1 d'un message de notification de commutation de noeud d'accès. le message de notification indique un deuxième contexte de communication comportant une deuxième configuration de transport et une deuxième configuration applicative. Ce deuxième contexte de communication est relatif à un transport des données via un noeud d'accès destinataire.
- des moyens de réception REC2 d'une information de comptage de message de notification.
- des moyens de filtrage FI de la deuxième configuration de transport à partir du message de notification reçu par le récepteur REC1 en fonction de l'information de comptage.
- des moyens de transmission TRANS d'un message de notification filtré à destination d'une application.

Les moyens sont mis en oeuvre itérativement pour l'ensemble des applications en cours, les applications étant d'autre part aptes à se reconfigurer selon les paramètres de la configuration applicative reçue.

Dans un mode particulier de réalisation, les moyens de réception REC1 et REC2 sont confondus, par exemple si le message de notification comporte également l'information de comptage.

La **figure 3** représente un schéma bloc fonctionnel d'un dispositif de commutation de noeud d'accès pour un noeud de commutation.

Le noeud de commutation met en oeuvre des moyens de signalisation de changement de noeud d'accès à destination des entités communicantes distantes non représentés. Ainsi, le noeud de commutation intègre au moins les couches protocolaires de transport et au moins les couches 4 (transport) et 5 (session) pour un modèle OSI, ou les 5 couches protocolaires pour un modèle IETF.

Le noeud de commutation est apte à informer les entités communicantes distantes d'un changement de noeud d'accès, et en particulier les informer d'un changement d'adresse IP du terminal. Les entités communicantes distantes considéreront cette nouvelle adresse IP du terminal après commutation. Le noeud de commutation exécute par exemple un protocole de couche transport, tel le SCTP (pour "'Stream Control Session Protocol" en anglais), ou bien de couche session tel le SIP (pour "Session Initiation Protocole").

Le noeud de commutation comporte en outre une unité centrale de commande, non représentée, à laquelle les moyens inclus sont reliés et destinés à contrôler le fonctionnement de ces moyens.

Le dispositif de commutation de noeud d'accès pour un noeud de commutation comporte:
- des moyens EMET1 d'émission d'un message de notification de commutation de noeud d'accès. Le message de notification indique un deuxième contexte de communication comportant une deuxième configuration de transport et une deuxième configuration applicative. Ce deuxième contexte de communication est relatif à un transport des données via un noeud d'accès destinataire.
- des moyens EMET2 d'émission d'une information de comptage associée à ce message de notification de changement de noeud d'accès.

Les moyens sont mis en oeuvre itérativement pour l'ensemble des applications en cours entre le terminal et la ou les entités communicantes distantes.

Dans un mode particulier de réalisation, les moyens d'émission EMET1 et EMET2 sont confondus, par exemple si le message de notification comporte également l'information de comptage.

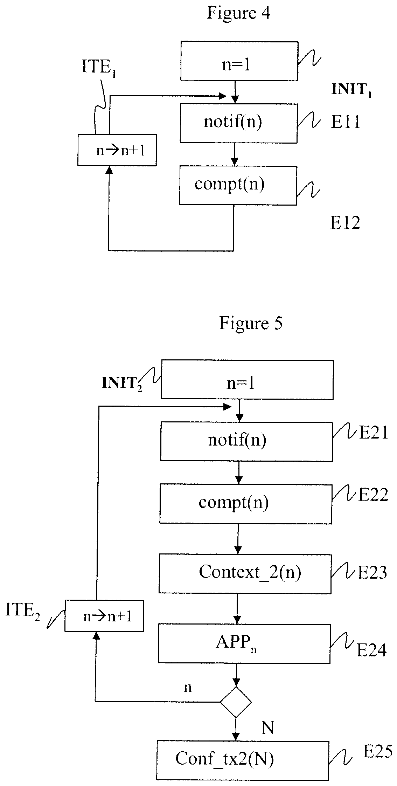

Un exemple particulier de mise en oeuvre du procédé de commande de commutation de noeud d'accès pour un noeud de commutation va maintenant être décrit en référence à la **figure 4****.**

Initialement, le terminal est connecté, ou attaché, à un noeud d'accès origine et met en oeuvre un ensemble de N applications APPₙ, n variant de 1 à N, avec une pluralité d'entités communicantes distantes à travers le réseau à commutation de paquet. Le terminal est associé à un ensemble de premiers contextes de communication context_1(n) comportant une première configuration de transport conf_tx1(n) et une première configuration applicative conf_app1(n), n variant de 1 à N. Les premiers contextes de communication sont relatifs à des transports de données via le noeud d'accès origine. Des deuxièmes contextes de communication context_2(n), n variant de 1 à N, sont relatifs à des transports de données via le noeud d'accès destinataire. Un deuxième contexte de communication comporte une deuxième configuration de transport conf_tx2(n) et une deuxième configuration applicative conf_app2(n), n variant de 1 à N.

Ces deuxièmes contextes de communication sont déterminés lors de procédures de décision et gestion de commutation de noeud d'accès mises en oeuvre par un équipement du réseau. Ces procédures, bien connues de l'homme du métier, décident de la commutation de noeud d'accès et affectent de nouveaux chemins de routage pour l'ensemble d'applications.

Dans un mode de réalisation particulier, ces procédures de décision et gestion sont mises en oeuvre dans le noeud de commutation.

Des étapes E11 à E12 sont réitérées pour l'ensemble des deuxièmes contextes de communication, c'est à dire de façon équivalente pour l'ensemble d'applications. Les itérations sont symbolisées par une étape d'initialisation INIT₁ et une étape d'incrémentation ITE₁ des indices n des applications APPₙ, n variant de 1 à N.

A l'étape E11, l'émetteur EMET1 du noeud de commutation génère et émet un message notif(n) de notification de changement de noeud d'accès à destination du terminal. Ce message indique un deuxième contexte de communication context_2(n) comprenant notamment une deuxième configuration de transport conf_tx2(n) relative à des échanges de données futures via le noeud d'accès destinataire pour l'application APPₙ.

Le message de notification est par exemple un message de type INVITE ou RE-INVITE pour le protocole SIP défini dans la spécification ***RFC 3261*** défini par l'organisme IETF. Ce message est enrichi du contexte de communication dans l'entête ou le corps du message.

A l'étape E12, l'émetteur EMET2 du noeud de commutation attribue et émet une information de comptage compt(n) associée au message de notification généré lors de l'étape E11. L'information de comptage correspond par exemple au nombre d'itérations déjà effectuées, au deuxième contexte de communication concerné, au mode d'exécution de la configuration de transport contenu dans le message de notification.

Dans un mode particulier de réalisation, l'information de comptage est insérée dans un champ disponible du message de notification. Par exemple, l'information de comptage est insérée à la suite du champ indiquant le deuxième contexte de communication dans le message de type INVITE ou RE-INVITE pour le protocole SIP.

Un exemple particulier de mise en oeuvre du procédé de commutation de noeud d'accès d'un terminal selon l'invention en référence à la **figure 5****.**

Initialement, le terminal est connecté, ou attaché, à un noeud d'accès origine et met en oeuvre un ensemble de N applications APPₙ, n variant de 1 à N, avec une pluralité d'entités communicantes distantes à travers le réseau à commutation de paquet. Le terminal est associé à un ensemble de premiers contextes de communication context_1(n) comportant une première configuration de transport conf_tx1(n) et une première configuration applicative conf_app1(n), n variant de 1 à N.

Les informations de transport de données pour l'ensemble d'application sont identiques. En d'autres termes, les valeurs des informations des premières configurations de transport conf_tx1(n) sont identiques, n variant de 1 à N.

Des étapes E21 à E24 sont réitérées pour l'ensemble des premiers contextes de communication, c'est à dire de façon équivalente pour l'ensemble d' applications. Les itérations sont symbolisées par une étape d'initialisation INIT₂ et une étape d'incrémentation ITE₂ des indices n des applications APPₙ, n variant de 1 à N.

En une étape E21, le récepteur REC1 du terminal reçoit un message de notification, et en particulier reçoit une deuxième configuration de transport context_2(n) pour l'application APPₙ.

Ce message de notification est émis par le noeud de commutation par exemple par un message SIP de type INVITE ou RE-INVITE enrichi.

En une étape E22, le récepteur REC2 du terminal reçoit une information de comptage compt(n).

Cette information est émise par le noeud de commutation.

Dans un mode particulier de réalisation, les étapes E21 et E22 sont réalisées simultanément par un unique récepteur si l'information de comptage a été insérée dans un champ disponible du message de notification.

Par exemple, le message est un message SIP de type INVITE ou RE-INVITE enrichi du deuxième de contexte de communication et de l'information de comptage.

En une étape E23, les moyens de filtrage FI du terminal filtrent la deuxième configuration de transport conf_tx2(n) du deuxième contexte de communication context_2(n).

Ainsi, les moyens de filtrage suppriment les informations de la deuxième configuration de transport conf_tx2(n).

En une étape E24, les moyens de transmission du terminal transmettent un message de notification filtré à l'application APPₙ correspondant à l'itération n.

Ce message est par exemple un message SIP de type INVITE ou RE-INVITE dans le cas d'un protocole SIP.

L'application APPₙ peut ainsi mettre à jour ses paramètres en fonction de la deuxième configuration applicative conf_app2(n).

De plus, les moyens de filtrage FI du terminal testent l'information de comptage. Si l'information de comptage indique que l'itération courante est la dernière itération N, les paramètres de transport sont mis à jour en fonction de la deuxième configuration de transport cont_tx2(N) lors d'une étape E25. Le terminal est alors apte à recevoir et émettre des données avec la ou les entités communicantes distantes via le noeud d'accès destinataire par reconfiguration des paramètres de transport.

L'invention décrite ici concerne un dispositif de commutation de noeud d'accès pour un terminal. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Il en est de même pour le dispositif de commande de changement du noeud d'accès pour un noeud de commutation.

Le support d'enregistrement d'informations peut être n'importe quelle entité ou dispositif capable de stocker le programme. Par exemple, le support peut comporter un moyen de stockage ou support d'enregistrement sur lequel est stocké le programme d'ordinateur selon l'invention, tel que, mais non limité à, une ROM, par exemple un CD ROM ou une ROM de circuit microélectronique, ou encore une clé USB, ou un moyen d'enregistrement magnétique, par exemple une disquette (floppy disc) ou un disque dur, ou une carte à puce.

## Revendications

1. Procédé de commutation de noeud d'accès (NA₁, NA₂, NA₃, NA₄) d'un terminal (M) apte à mettre en oeuvre un ensemble d'applications (APPₙ) avec au moins une entité communicante distante (EC₁, EC₂, EC₃, EC₄) au travers d'un réseau à commutation de paquet (R_IP), ledit terminal étant associé à un ensemble de premiers contextes de communication, un premier contexte de communication comportant une même première configuration de transport (conf_tx1(n)) commune à l'ensemble d'applications et une première configuration applicative (conf_app1 (n)) correspondant à une application donnée,
ledit procédé étant **caractérisé en ce qu'**il comporte des itérations des étapes de :
• réception par le terminal d'un message de notification (notif(n)) de commutation de noeud d'accès, ledit message indiquant un deuxième contexte de communication (context_2(n)) comportant une deuxième configuration de transport (conf_tx2(n)),
• réception par le terminal d'une information de comptage (compt(n)) de message de notification,
• filtrage par suppression de ladite deuxième configuration de transport dudit deuxième contexte de communication en fonction de ladite information de comptage,
• transmission d'un message de notification filtré à l'application correspondant à l'itération courante,
• mise à jour de paramètres de transport en fonction de ladite deuxième configuration de transport lorsque l'information de comptage indique que l'itération courante est la dernière itération,
lesdites étapes étant réitérées pour l'ensemble des premiers contextes de communication.

2. Procédé selon la revendication 1 dans lequel le message de notification de commutation de noeud d'accès et l'information de comptage sont émis par un noeud de commutation.

3. Procédé selon la revendication 2, dans lequel le noeud de commutation est un noeud d'accès auquel le terminal est connecté avant commutation.

4. Procédé de commande de commutation de noeud d'accès (NA₁, NA₂, NA₃, NA₄) d'un terminal (M) apte à mettre en oeuvre un ensemble d'applications (APPₙ) avec au moins une entité communicante distante (EC₁, EC₂, EC₃, EC₄) au travers d'un réseau à commutation de paquet (R_IP), ledit terminal étant associé à un ensemble de premiers contextes de communication, un premier contexte de communication comportant une même première configuration de transport (conf_tx1(n)) commune à l'ensemble d'applications et une première configuration applicative (conf_app1(n)) correspondant à une application donnée,
ledit procédé mis en oeuvre dans un noeud de commutation (NA₁, NA₂, NA₃, NA₄, NI₁, NI₂) étant **caractérisé en ce qu'**il comporte:
• une étape d'émission d'un message de notification (notif(n)) de commutation de noeud d'accès à destination dudit terminal, ledit message indiquant un deuxième contexte de communication (context_2(n)) comportant une deuxième configuration de transport (conf_tx2(n)),
• une étape d'émission d'une information de comptage (compt(n)) associée audit message de notification,
lesdites étapes étant mises en oeuvre itérativement pour l'ensemble des premiers contextes de communication.

5. Dispositif de commutation de noeud d'accès (NA₁, NA₂, NA₃, NA₄) d'un terminal (M) apte à mettre en oeuvre un ensemble d'applications (APPₙ) avec au moins une entité communicante distante (EC₁, EC₂, EC₃, EC₄) au travers d'un réseau à commutation de paquet (R_IP), ledit terminal étant associé à un ensemble de premiers contextes de communication, un premier contexte de communication comportant une même première configuration de transport (conf_tx1(n)) commune à l'ensemble d'applications et une première configuration applicative (conf_app1(n)) correspondant à une application donnée,
ledit dispositif étant **caractérisé en ce qu'**il comporte
• des moyens (REC1) de réception d'un message de notification (notif(n)) de commutation de noeud d'accès, ledit message indiquant un deuxième contexte de communication (context_2(n)) comportant une deuxième configuration de transport (conf_tx2(n)),
• des moyens (REC2) de réception d'une information de comptage (compt(n)) de message de notification,
• des moyens (FI) de filtrage par suppression de ladite deuxième configuration de transport dudit deuxième contexte de communication en fonction de ladite information de comptage,
• des moyens (TRANS) de transmission d'un message de notification filtré à l'application correspondant à l'itération courante,
• des moyens de mise à jour de paramètres de transport en fonction de ladite deuxième configuration de transport lorsque l'information de comptage indique que l'itération courante est la dernière itération,
lesdits moyens étant mis en oeuvre itérativement pour l'ensemble des premiers contextes de communication.

6. Dispositif de commande de commutation de noeud d'accès (NA₁, NA₂, NA₃, NA₄) d'un terminal (M) apte à mettre en oeuvre un ensemble d'applications (APPₙ) avec au moins une entité communicante distante (EC₁, EC₂, EC₃, EC₄) au travers d'un réseau à commutation de paquet (R_IP), ledit terminal étant associé à un ensemble de premiers contextes de communication, un premier contexte de communication comportant une même première configuration de transport (conf_tx1(n)) commune à l'ensemble d'applications et une première configuration applicative (conf_app1(n)) correspondant à une application donnée,
ledit dispositif étant **caractérisé en ce qu'**il comporte:
• des moyens (EMET1) d'émission d'un message de notification (notif(n)) de commutation de noeud d'accès à destination dudit terminal, ledit message indiquant un deuxième contexte de communication (context_2(n)) comportant une deuxième configuration de transport (conf_tx2(n)),
• des moyens (EMET2) d'émission d'une information de comptage (compt(n)) associée audit message de notification,
lesdits moyens étant mis en oeuvre itérativement pour l'ensemble des premiers contextes de communication.

7. Terminal comprenant un dispositif selon la revendication 5.

8. Noeud de commutation comportant un dispositif selon la revendication 6.

9. Système de télécommunication comprenant au moins un terminal selon la revendication 7 et un noeud de commutation selon la revendication 8.

10. Programme d'ordinateur pour un terminal comportant des instructions logicielles pour commander la mise en en oeuvre des étapes du procédé selon l'une quelconque des revendications 1 à 3, lorsque ce programme est exécuté par le terminal.

11. Programme d'ordinateur pour un noeud de commutation comportant des instructions logicielles pour commander la mise en en oeuvre des étapes du procédé selon la revendication 4, lorsque ce programme est exécuté par le noeud de commutation.

## Patentansprüche

1. Verfahren zum Umschalten eines Zugangsknotens (NA₁, NA₂, NA₃, NA₄) eines Endgeräts (M), das eine Reihe von Anwendungen (APPₙ) mit mindestens einer fernen kommunizierenden Instanz (EC₁, EC₂, EC₃, EC₄) über ein Paketvermittlungsnetz (R_IP) ausführen kann, wobei das Endgerät einer Reihe von ersten Kommunikationskontexten zugeordnet ist, wobei ein erster Kommunikationskontext eine gleiche erste Transportkonfiguration (conf_tx1(n)), die der Reihe von Anwendungen gemeinsam ist, und eine erste Anwendungskonfiguration (conf_appl(n)) aufweist, die einer gegebenen Anwendung entspricht,
wobei das Verfahren **dadurch gekennzeichnet ist, dass** es Iterationen der folgenden Schritte aufweist:
• Empfang durch das Endgerät einer Mitteilungsnachricht (notif(n)) einer Zugangsknotenumschaltung, wobei die Nachricht einen zweiten Kommunikationskontext (context_2(n)) anzeigt, der eine zweite Transportkonfiguration (conf_tx2(n)) aufweist,
• Empfang durch das Endgerät einer Zählinformation (compt(n)) einer Mitteilungsnachricht,
• Filterung durch Unterdrückung der zweiten Transportkonfiguration des zweiten Kommunikationskontexts abhängig von der Zählinformation,
• Übertragung einer gefilterten Mitteilungsnachricht an die der laufenden Iteration entsprechende Anwendung,
• Aktualisierung von Transportparametern abhängig von der zweiten Transportkonfiguration, wenn die Zählinformation anzeigt, dass die laufende Iteration die letzte Iteration ist,
wobei die Schritte für die Gesamtheit der ersten Kommunikationskontexte wiederholt werden.

2. Verfahren nach Anspruch 1, wobei die Mitteilungsnachricht einer Zugangsknotenumschaltung und die Zählinformation von einem Umschaltknoten gesendet werden.

3. Verfahren nach Anspruch 2, wobei der Umschaltknoten ein Zugangsknoten ist, mit dem das Endgerät vor der Umschaltung verbunden ist.

4. Verfahren zur Umschaltsteuerung eines Zugangsknotens (NA₁, NA₂, NA₃, NA₄) eines Endgeräts (M), das eine Reihe von Anwendungen (APPₙ) mit mindestens einer fernen kommunizierenden Instanz (EC₁, EC₂, EC₃, EC₄) über ein Paketvermittlungsnetz (R_IP) ausführen kann, wobei das Endgerät einer Reihe von ersten Kommunikationskontexten zugeordnet ist, wobei ein erster Kommunikationskontext eine erste Transportkonfiguration (conf_tx1(n)), die der Reihe von Anwendungen gemeinsam ist, und eine erste Anwendungskonfiguration (conf_appl(n)) aufweist, die einer gegebenen Anwendung entspricht,
wobei das in einem Umschaltknoten (NA₁, NA₂, NA₃, NA₄, NI₁, NI₂) ausgeführte Verfahren **dadurch gekennzeichnet ist, dass** es aufweist:
• einen Schritt des Sendens einer Mitteilungsnachricht (notif(n)) einer Zugangsknotenumschaltung an das Endgerät, wobei die Nachricht einen zweiten Kommunikationskontext (context_2(n)) anzeigt, der eine zweite Transportkonfiguration (conf_tx2(n)) aufweist,
• einen Schritt des Sendens einer der Mitteilungsnachricht zugeordneten Zählinformation (compt(n)),
wobei die Schritte iterativ für die Gesamtheit der ersten Kommunikationskontexte ausgeführt werden.

5. Umschaltvorrichtung eines Zugangsknotens (NA₁, NA₂, NA₃, NA₄) eines Endgeräts (M), das eine Reihe von Anwendungen (APPₙ) mit mindestens einer fernen kommunizierenden Instanz (EC₁, EC₂, EC₃, EC₄) über ein Paketvermittlungsnetz (R_IP) ausführen kann, wobei das Endgerät einer Reihe von ersten Kommunikationskontexten zugeordnet ist, wobei ein erster Kommunikationskontext eine gleiche erste Transportkonfiguration (conf_tx1(n)), die der Reihe von Anwendungen gemeinsam ist, und eine erste Anwendungskonfiguration (conf_appl(n)) aufweist, die einer gegebenen Anwendung entspricht,
wobei die Vorrichtung **dadurch gekennzeichnet ist, dass** sie aufweist
• Einrichtungen (REC1) zum Empfang einer Mitteilungsnachricht (notif(n)) einer Zugangsknotenumschaltung, wobei die Nachricht einen zweiten Kommunikationskontext (context_2(n)) anzeigt, der eine zweite Transportkonfiguration (conf_tx2(n)) aufweist,
• Einrichtungen (REC2) zum Empfang einer Zählinformation (compt(n)) einer Mitteilungsnachricht,
• Einrichtungen (FI) zur Filterung durch Unterdrückung der zweiten Transportkonfiguration vom zweiten Kommunikationskontext abhängig von der Zählinformation,
• Einrichtungen (TRANS) zur Übertragung einer gefilterten Mitteilungsnachricht an die Anwendung entsprechend der laufenden Iteration,
• Einrichtungen zur Aktualisierung von Transportparametern abhängig von der zweiten Transportkonfiguration, wenn die Zählinformation anzeigt, dass die laufende Iteration die letzte Iteration ist,
wobei die Einrichtungen iterativ für die Gesamtheit der ersten Kommunikationskontexte angewendet werden.

6. Vorrichtung zur Umschaltsteuerung eines Zugangsknotens (NA₁, NA₂, NA₃, NA₄) eines Endgeräts (M), das eine Reihe von Anwendungen (APPₙ) mit mindestens einer fernen kommunizierenden Instanz (EC₁, EC₂, EC₃, EC₄) über ein Paketvermittlungsnetz (R_IP) ausführen kann, wobei das Endgerät einer Reihe von ersten Kommunikationskontexten zugeordnet ist, wobei ein erster Kommunikationskontext eine gleiche erste Transportkonfiguration (conf_tx1(n)), die der Reihe von Anwendungen gemeinsam ist, und eine erste Anwendungskonfiguration (conf_appl(n)) aufweist, die einer gegebenen Anwendung entspricht,
wobei die Vorrichtung **dadurch gekennzeichnet ist, dass** sie aufweist:
• Einrichtungen (EMET1) zum Senden einer Mitteilungsnachricht (notif(n)) einer Zugangsknotenumschaltung an das Endgerät, wobei die Nachricht einen zweiten Kommunikationskontext (context_2(n)) anzeigt, der eine zweite Transportkonfiguration (conf_tx2(n)) aufweist,
• Einrichtungen (EMET2) zum Senden einer der Mitteilungsnachricht zugeordneten Zählinformation (compt(n)),
wobei die Einrichtungen iterativ für die Gesamtheit der ersten Kommunikationskontexte angewendet werden.

7. Endgerät, das eine Vorrichtung nach Anspruch 5 enthält.

8. Umschaltknoten, der eine Vorrichtung nach Anspruch 6 aufweist.

9. Fernmeldesystem, das mindestens ein Endgerät nach Anspruch 7 und einen Umschaltknoten nach Anspruch 8 enthält.

10. Computerprogramm für ein Endgerät, das Softwareanweisungen aufweist, um die Ausführung der Schritte des Verfahrens nach einem der Ansprüche 1 bis 3 zu steuern, wenn dieses Programm vom Endgerät ausgeführt wird.

11. Computerprogramm für einen Umschaltknoten, das Softwareanweisungen aufweist, um die Ausführung der Schritte des Verfahrens nach Anspruch 4 zu steuern, wenn dieses Programm vom Umschaltknoten ausgeführt wird.

## Claims

1. Method for switching access nodes (NA₁, NA₂, NA₃, NA₄) for a terminal (M) capable of implementing a set of applications (APPₙ) with at least one remote communicating entity (EC₁, EC₂, EC₃, EC₄) through a packet-switched network (R_IP), said terminal being associated with a set of first communication contexts, a first communication context including a same first transport configuration (conf_tx1(n)) common to the set of applications and a first application configuration (conf_appl(n)) corresponding to a given application, said method being **characterized in that** it comprises iterations of the following steps:
• reception by the terminal of an access node switching notification message (notif(n)), said message indicating a second communication context (context_2(n)) including a second transport configuration (conf_tx2(n)),
• reception by the terminal of notification message count information (compt(n)),
• filtering by deletion of said second transport configuration of said second communication context based on said count information,
• transmission of a filtered notification message to the application corresponding to the current iteration,
• updating of transport parameters based on said second transport configuration when the count information indicates that the current iteration is the last iteration,
said steps being reiterated for all the first communication contexts.

2. Method according to Claim 1, in which the access node switching notification message and the count information are sent by a switching node.

3. Method according to Claim 2, in which the switching node is an access node to which the terminal is connected before switching.

4. Method for controlling the switching of access nodes (NA₁, NA₂, NA₃, NA₄) for a terminal (M) capable of implementing a set of applications (APPₙ) with at least one remote communicating entity (EC₁, EC₂, EC₃, EC₄) through a packet-switched network (R_IP), said terminal being associated with a set of first communication contexts, a first communication context including a same first transport configuration (conf_tx1(n)) common to the set of applications and a first application configuration (conf_appl(n)) corresponding to a given application,
said method implemented in a switching node (NA₁, NA₂, NA₃, NA₄, NI₁, NI₂) being **characterized in that** it comprises:
• a step for sending an access node switching notification message (notif (n)) to said terminal, said message indicating a second communication context (context_2(n)) including a second transport configuration (conf_tx2(n)),
• a step for sending count information (compt(n)) associated with said notification message,
said steps being implemented iteratively for all the first communication contexts.

5. Device for switching access nodes (NA₁, NA₂, NA₃, NA₄) for a terminal (M) capable of implementing a set of applications (APPₙ) with at least one remote communicating entity (EC₁, EC₂, EC₃, EC₄) through a packet-switched network (R_IP), said terminal being associated with a set of first communication contexts, a first communication context including a same first transport configuration (conf_tx1(n)) common to the set of applications and a first application configuration (conf_appl(n)) corresponding to a given application, said device being **characterized in that** it comprises
• means (REC1) for receiving an access node switching notification message (notif(n)), said message indicating a second communication context (context_2(n)) including a second transport configuration (conf_tx2(n)),
• means (REC2) for receiving notification message count information (compt(n)),
• means (FI) for filtering by deletion said second transport configuration of said second communication context on the basis of said count information,
• means (TRANS) for transmitting a filtered notification message to the application corresponding to the current iteration,
updating means for transport parameters based on said second transport configuration when the count information indicates that the current iteration is the last iteration,
said means being implemented iteratively for all the first communication contexts.

6. Device for controlling the switching of access nodes (NA₁, NA₂, NA₃, NA₄) for a terminal (M) capable of implementing a set of applications (APPₙ) with at least one remote communicating entity (EC₁, EC₂, EC₃, EC₄) through a packet-switched network (R_IP), said terminal being associated with a set of first communication contexts, a first communication context including a same first transport configuration (conf_tx1(n)) common to the set of applications and a first application configuration (conf_app1(n)) corresponding to a given application, said device being **characterized in that** it comprises:
• means (EMET1) for sending an access node switching notification message (notif(n)) to said terminal, said message indicating a second communication context (context_2(n)) including a second transport configuration (conf_tx2(n)),
• means (EMET2) for sending count information (compt(n)) associated with said notification message,
said means being implemented iteratively for all the first communication contexts.

7. Terminal including a device according to Claim 5.

8. Switching node including a device according to Claim 6.

9. Telecommunication system comprising at least one terminal according to Claim 7 and one switching node according to Claim 8.

10. Computer program for a terminal including software instructions for controlling the implementation of the steps of the method according to any one of Claims 1 to 3, when this program is executed by the terminal.

11. Computer program for a switching node including software instructions for controlling the implementation of the steps of the method according to Claim 4, when this program is executed by the switching node.
